# EUROPÄISCHE PATENTSCHRIFT

(11) **EP 2 634 026 B1**
(45) Veröffentlichungstag und Bekanntmachung des Hinweises auf die Patenterteilung: **16.01.2019**
(21) Anmeldenummer: 13157056.6
(22) Anmeldetag: 27.02.2013
(51) Int. Cl.: B60J 7/06, B60J 7/04

(54) **Kraftfahrzeug mit einer Dachöffnung**
Motor vehicle with a roof opening
Véhicule automobile doté d'une ouverture de toit

(30) Priorität: 01.03.2012 DE 102012101753; 15.06.2012 DE 102012210148
(43) Veröffentlichungstag der Anmeldung: 04.09.2013
(73) Patentinhaber: Magna Steyr Fahrzeugtechnik AG & Co KG, 8041 Graz (AT); Magna Car Top Systems GmbH, 74321 Bietigheim-Bissingen (DE)
(72) Erfinder: Aschaber, Christoph, 8010 Graz (AT); Careni, Claus, 74321 Bietigheim-Bissingen (DE); Klein, Berthold, 74343 Sachsenheim (DE); Richter, Wolfgang, Michigan, 48382 (US); Rodler, Martin, 8160 Krottendorf (AT)
(74) Vertreter: Zangger, Bernd

(56) Entgegenhaltungen:
- WO-A1-2011/148069
- DE-C1- 10 140 981
- DE-C1- 19 737 284

## Beschreibung

Die vorliegende Erfindung betrifft ein Kraftfahrzeug mit einer Dachöffnung in einer festen Dachfläche des Kraftfahrzeugs und zumindest einem Dachmechanismus (1), zum wahlweisen Verschließen und zumindest teilweisen Öffnen der Dachöffnung.

Aus dem Stand der Technik ist die WO2011148069A1 bekannt. Es wird ein flexibles Verdeck beschrieben, welches eine Vielzahl von starren transparenten Platten in Längsrichtung des Verdecks aufweist, wobei sich das Verdeck auf sich selbst falten und stapeln kann, und wobei sich die starren Platten aufeinander ablegen. Die Platten sind im wesentlichen rechteckig und parallel zueinander, wobei deren langen Seiten sich in Querrichtung zum Verdeck erstrecken, wobei zwei aufeinander folgende Platten durch einen Streifen des Verdeckbezugs getrennt sind, wobei der Streifen des Verdeckbezugs im wesentlichen der Abmessung des Streifen der starren Platten entspricht.

Nachteilig bei dieser Ausführung ist, dass die Verdeckbezugstreifen gleiche Abmessungen wie die starren transparenten Elemente aufweisen, wodurch die Sichtfläche nach außen eingeschränkt ist.

Aufgabe der Erfindung ist es das Faltdach so zu verbessern, dass die oben genannten Nachteile beseitigt werden, und ein großer Bereich des Verdeckbezugs mit transparenten Elementen versehen werden kann, wobei bei der Faltung des Verdeckbezugs die einzelnen Falten relativ zur Ablagehöhe niedrig bleiben. Erfindungsgemäß wird ein Kraftfahrzeug mit einer Dachöffnung vorgeschlagen in einer festen Dachfläche des Kraftfahrzeugs mit zumindest einem Dachmechanismus, zum wahlweisen Verschließen und zumindest teilweisen Öffnen der Dachöffnung, wobei der Dachmechanismus ein Faltdachsystem aufweist, wobei das Faltdachsystem zumindest einen Verdeckbezug umfasst, in welchem zumindest ein größeres transparentes Element angeordnet ist, wobei nach dem zumindest einem größeren transparenten Element kleinere quer zur Fahrtrichtung zumindest mehrteilig angeordnete transparente Elemente angeordnet sind, und wobei mindestens ein Element eine Bombierung quer zur Fahrtrichtung aufweist, welche im wesentlichen jener der Dachwölbung entspricht.

Es wird weiters ein Verfahren zum zumindest teilweisen Öffnen und Schließen eines Faltdachs vorgeschlagen, wobei sich im Faltdach größere und kleinere transparente Elemente in Fahrzeuglängsrichtung abwechseln, wobei ein Antrieb das Faltdach in Fahrzeuglängsrichtung zum Öffnen oder zum Schließen bewegt, so dass das Faltdach Falten ausbildet, wobei sich im gefalteten Zustand die größeren transparente Elemente in der oberen, nach oben gewandten Seite einer Falte ablegen, und wobei sich die kleineren transparente Element in der unteren, nach unten gewandten Seite einer Falte ablegen und dabei von den größeren transparenten Elementen verdeckt werden.

Weiterbildungen der Erfindung sind in den abhängigen Ansprüchen, der Beschreibung sowie den beigefügten Zeichnungen angegeben.

Die transparenten Elemente können zusätzlich zur Wölbung, quer zur Fahrtrichtung, eine Wölbung in Fahrzeuglängsrichtung, im wesentlichen jener Kontur des festen Dachteils entsprechend, aufweisen.
In einer bevorzugten Ausführungsform weisen alle größeren transparenten Elemente eine Wölbung, entsprechend jener der Dachwölbung, auf.

Die kleineren transparenten Elemente können plan oder quer und längs zur Fahrtrichtung bombiert ausgeführt sein.

Erfindungsgemäß legt sich zumindest ein transparentes Element auf einem Textilstreifen des zumindest einen Verdeckbezugs ab. Die Ausführung kann jedoch auch vorsehen, dass sich z.B. alle großen transparenten Elemente auf den Textilstreifen des Verdeckbezugs ablegen, wobei bedingt durch die Konstruktion des Faltdachsystems das oberste und/oder das unterste transparente Element ausgenommen sein können.
In einer weiteren Ausführungsform kann auch vorgesehen sein, dass sich, beispielsweise zusätzlich, die kleinen transparenten Elemente am Textilstreifen des Verdeckbezugs ablegen.
Durch das Ablegen der transparenten Elemente auf dem Textilstreifen des zumindest einen Verdeckbezugs wird ein zuverlässiger Schutz vor Beschädigung, Scheuern und ungewollter Lärmentwicklung durch aufeinander Schlagen der transparenten Elemente gewährleistet. Durch die Verbindung von Stoff mit den transparenten Elementen, wobei sich bevorzugt die kleineren transparente Elemente unter den größeren Elementen ablegen, wird in vorteilhafter Weise verhindert, dass sich die transparenten Elemente direkt berühren können, wodurch eine unerwünschte Geräuschbildung verhindert wird.

In einer bevorzugten Ausführungsform sind die kleineren transparenten Elemente schmäler als die größeren Elemente und sind in Querrichtung zumindest mehrteilig angeordnet, wobei die kleineren transparenten Elemente durch einen Textilstreifen des Verdeckbezugs miteinander verbunden sind, welche ein Falten/Knicken des Faltdachs in Querrichtung zulassen, wodurch sich die kleineren transparenten Elemente der Wölbung der größeren transparenten Elemente anpassen können und somit bei der Ablage eine relativ flache Struktur, hinsichtlich der Ablagehöhe, bilden.

Als Ergebnis liegen alle größeren transparente Elemente mit ihrer jeweiligen Innenseite aufeinander, wobei zwischen den großen transparenten Elementen die kleineren transparenten Elemente angeordnet sind. Die kleineren transparenten Elemente sind dabei so angeordnet, dass ihre Innenfläche der Innenfläche dem jeweiligen größeren transparenten Elemente zugewandt ist, und die Außenfläche des kleinen transparenten Elements der jeweiligen Außenfläche des größeren transparenten Elements zugewandt ist.

Gemäß einer Ausführungsform sind die transparenten Elemente durch Textilstreifen des Verdeckbezugs voneinander getrennt. Die Textilstreifen des Verdeckbezugs erlauben eine Faltung des Faltdachs, wodurch dieses beim Öffnen sich entsprechend übereinander ablegen kann.

Die Textilstreifen des Verdeckbezugs zwischen den kleineren transparenten Elementen helfen bei der Bildung einer Wölbung quer zur Fahrtrichtung. Dies wird im wesentlichen dadurch erreicht, dass Dach- und Faltspriegel wie sie aus dem Stand der Technik bekannt sind, in Zusammenspiel mit den kleinen transparenten Elementen im Verdeckbezug entsprechend ihrer Geometrie den Verdeckbezug formen.

In einer erfindungsgemäßen Ausführung weist der Dachmechanismus ein vorderes und ein hinteres Faltdachsystem auf. In einer bevorzugten Ausführungsform können dabei das vordere Faltdachsystem und das hintere Faltdachsystem unabhängig voneinander geöffnet bzw. geschlossen werden, wobei zumindest das hintere Faltdachsystem nach vorne und nach hinten verschiebbar ist. Die Betätigung des Faltdachsystems erfolgt über einen Antrieb, welcher mechanisch, pneumatisch, hydraulisch, elektrisch, manuell oder aus einer Kombination davon erfolgen.

Vorzugsweise ist der hintere Bereich der Dachöffnung in Fahrzeuglängsrichtung größer ausgebildet als der vordere Bereich der Dachöffnung.

Der hintere Verdeckbezug ist vorzugsweise an einem hinteren Dachrahmen angeordnet, wobei der hintere Dachrahmen ein nach hinten offenes U darstellt. Die hintere Dachöffnung kann dabei vom Verdeckbezug nach vorne und/oder nach hinten verschlossen oder geöffnet werden.
Diese Merkmale erlauben es, dass bei nach vorn geöffnetem Verdeck ein großer Laderaum geschaffen wird. Dadurch wird eine einfache Beladung auch mit höherem Ladegut, wie beispielsweise Fahrrädern, auf einfache Weise ermöglicht.

Gemäß einer weiteren vorteilhaften Ausgestaltung der Erfindung erfolgt die Anbringung des zumindest einen transparenten Elements im Verdeckbezug mittels Einschäumen.

Durch die beim Schäumen entstehende Wulst wird verhindert, dass sich die im gefalteten Zustand abgelegten transparenten Elementen gegenseitig berühren können und so vor Beschädigung, Scheuern und ungewollter Lärmentwicklung durch aufeinander Schlagen der transparenten Elemente verhindert.

Es ist jedoch denkbar, dass die Anbringung der transparenten Elemente durch Kleben, Schweißen oder jeder anderen bekannten Befestigungsmöglichkeit erfolgen kann.

Bei Verwendung von anderen Befestigungsmöglichkeiten zur Anbringung der transparenten Elemente im Verdeckbezug werden Einrichtungen vorgesehen, welche zuverlässig einen gegenseitigen Kontakt der transparenten Elemente verhindert.

In einer erfindungsgemäßen Ausführungsform weist der Verdeckbezug eine Vielzahl an transparenten Elementen in Fahrzeuglängsrichtung auf. Dadurch wird ein großer Sichtbereich nach außen geschaffen.

In einer weiteren erfindungsgemäßen Ausführungsform ist die Vielzahl transparenter Elemente in Fahrzeuglängsrichtung als steife Elemente ausgeführt. Es ist jedoch auch denkbar dass die transparenten Elemente aus einem nicht steifen Material hergestellt sind.
Die Geometrie der transparenten Elemente kann dabei beliebige Muster aufweisen.

Gemäß einer weiteren vorteilhaften Ausgestaltung erfolgt die Befestigung des vorderen Verdeckbezugs und des hinteren Verdeckbezugs über das zumindest eine größere transparente Element.

Gemäß einer weiteren Ausführungsform erfolgt die Faltung des zumindest einen Verdeckbezug über die zusätzlich angeordneten Stützelemente. Die Stützelemente sind in Führungselementen, welche sich in Führungsschienen befinden, angeordnet. Die Halterungen für die Führungselemente können dabei beim Einschäumen der transparenten Elemente mit geschäumt werden. Bei einer anderen Befestigungsmöglichkeit können auch Metallrahmen vorgesehen werden an denen entsprechende Halterungen für die Stützelemente zwischen den Führungselementen und den transparenten Elementen angebracht werden.

In einer weiteren Ausführungsform kann die Faltung über Faltspriegel, wie sie beispielsweise in der DE4041763C1 beschrieben werden, bewirkt werden.

Die Erfindung wird im Folgenden beispielhaft unter Bezugnahme auf die Zeichnungen beschrieben.
- Fig. 1: zeigt einen erfindungsgemäßen Dachmechanismus im geschlossenen Zustand.
- Fig. 2: zeigt ein hinteres Faltdachsystem in einer möglichen Öffnungsform.
- Fig. 3: zeigt ein hinteres Faltdachsystem mit Befestigungen für transparente Elemente in Führungsschienen.
- Fig. 4: zeigt in einer Prinzipdarstellung den unterschiedlichen Platzbedarf bei ungeteilten bzw. geteilten kleineren transparenten Elementen.
- Fig. 5: zeigt in einer Prinzipdarstellung die Ablage der steifen transparenten Elemente auf den Verdeckbezug

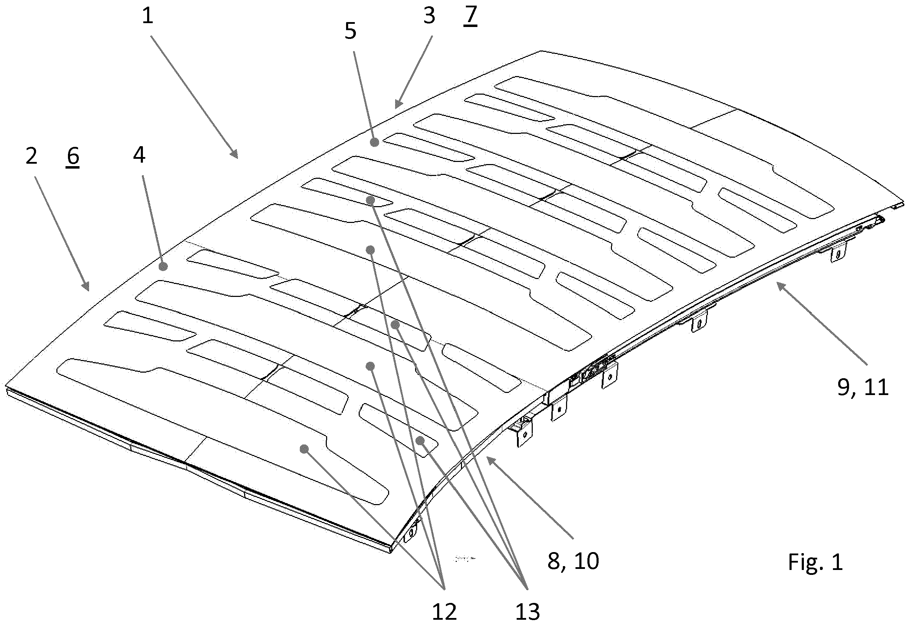

In Fig. 1 wird ein erfindungsgemäßer Dachmechanismus 1 im geschlossenen Zustand dargestellt. Der Dachmechanismus 1 umfasst dabei ein vorderes Faltdachsystem 2 und ein hinteres Faltdachsystem 3. Ein vorderer Verdeckbezug 4, sowie ein hinterer Verdeckbezug 5 verschließen einen vorderen Bereich der Dachöffnung 6 bzw. einen hinteren Bereich der Dachöffnung 7. Der vordere Verdeckbezug 4 ist dabei einem vorderen Dachrahmen 10, der hintere Verdeckbezug 5 einem hinteren Dachrahmen 11 zugeordnet. Im vorderen und hinteren Dachrahmen 10,11 sind jeweils, nicht miteinander verbundene, Führungsschienen 8,9 im vorderen bzw. hinteren Dachrahmen 10,11 integriert. Die Führungsschienen 8,9 dienen zur Aufnahme der beweglichen Dachelemente. Der vordere und der hintere Verdeckbezug 4,5 weisen transparente Dachelemente 12, 13 auf, welche unterschiedliche Breiten und/oder Längen und/oder Formen aufweisen können. Die transparenten Elemente 12, 13 weisen eine Wölbung auf, welche im wesentlichen annähernd jener des festen Dachelementes entspricht. Unter "annähernd" wird dabei eine Abweichung vom Wölbungsgrad des festen Dachelementes von max. 20% verstanden, da das feste Dachelement in der Regel keine konstante Wölbungsrundung in Fahrzeuglängsrichtung und Fahrzeugquerrichtung aufweist und die transparenten Elemente 12, 13 bei der Herstellung entsprechend der Fertigungstoleranzen Abweichungen aufweisen. Ebenso sind aufgrund der Einbautoleranzen im Verdeckbezug 4, 5, sowie der Einbaulage des Faltdachsystems 2, 3 im Kraftfahrzeug selbst, welches ebenfalls Einbautoleranzen unterliegt, Abweichungen möglich. Das Faltdach hat beim Spannen das Bestreben eine ebene Fläche zu bilden. Bei der Formgebung der Wölbung sind mit dem Kraftfahrzeug verbundene Dachspriegel ausschlaggebend, die in Fahrzeugquerrichtung angeordnet sind. Dadurch sind ebenfalls Abweichungen von der "idealen" Dachwölbung des festen Dachelementes möglich.

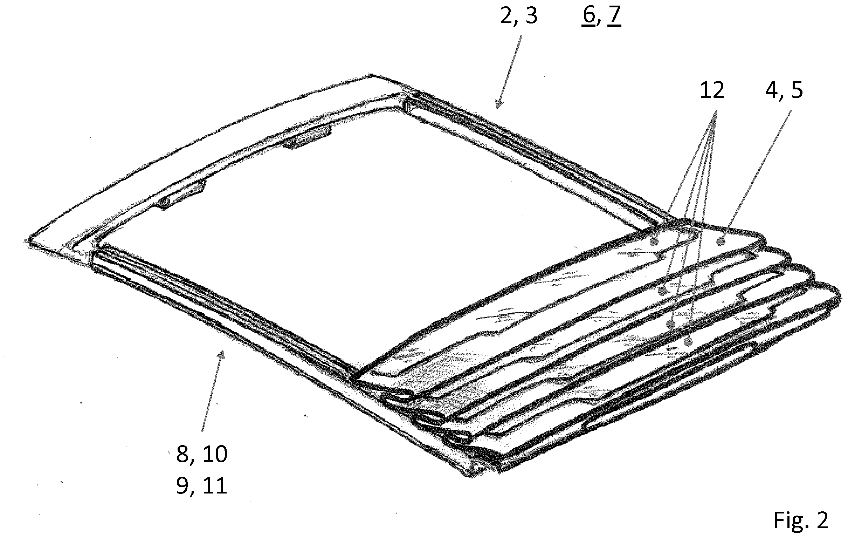

In Fig. 2 wird eine mögliche Öffnungsform des hinteren Faltdachsystems 3 dargestellt. Der Verdeckbezug faltet sich zwischen den transparenten Elementen, wobei die größeren transparenten Elemente 12 sich nach oben ablegen, und wobei sich die kleineren transparenten Elemente 13 unter den größeren transparenten Elementen 12 ablegen und von diesen verdeckt werden.
Man kann sich Fig. 2 auch als Öffnungsstellung für das vordere Faltdachsystem 2 vorstellen. Der vordere Verdeckbezug 4 wird im geöffneten Zustand in Fahrzeuglängsrichtung gesehen nach hinten geöffnet. Der geöffnete vordere Verdeckbezug 4 dient im offenen Zustand gleichzeitig als Windabweiser für den hinteren Bereich der Dachöffnung 7. Die Faltung erfolgt über zusätzliche Stützelemente oder über Dachspriegel, in Fig. 2 nicht dargestellt.

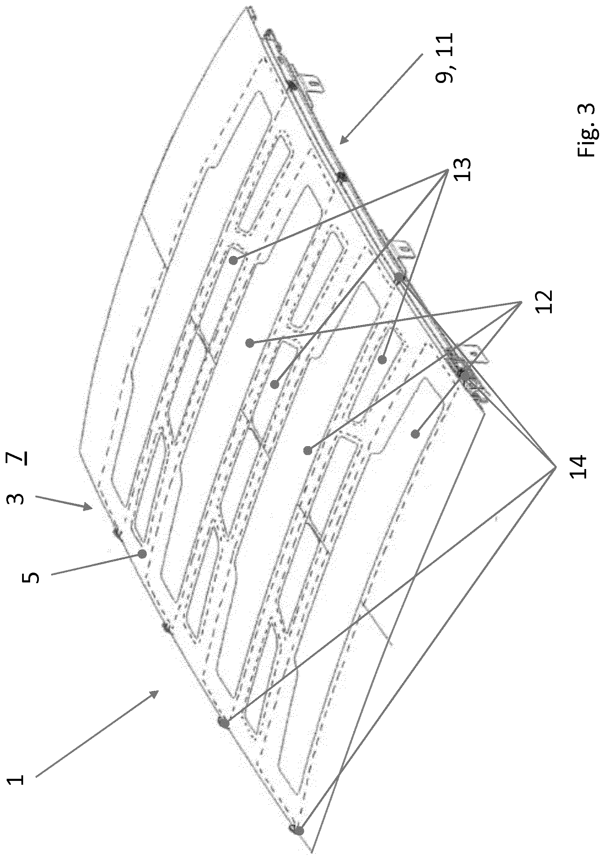

Fig. 3 zeigt den hinteren Verdeckbezug 5 im geschlossenen Zustand. Im Bereich der Dachrahmen 10, 11 sind Befestigungen für die transparenten Elemente in den Führungsschienen 14 vorgesehen.

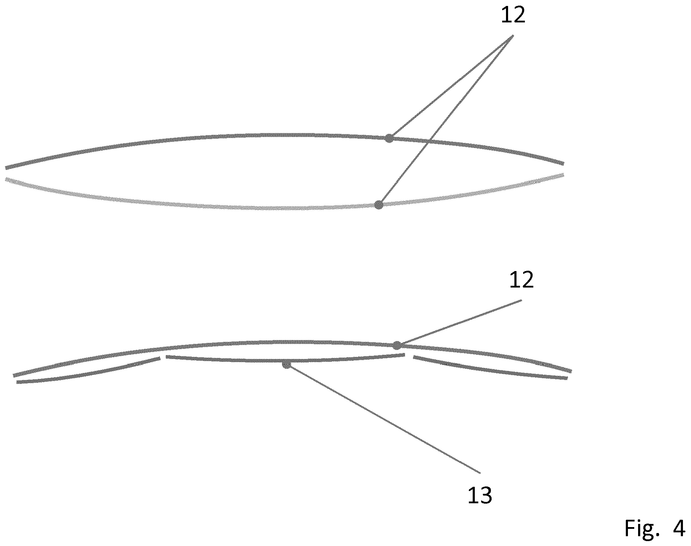

Fig. 4 zeigt in einer Prinzipskizze den reduzierten Platzbedarf beim Ablegen des Faltdachs 2, 3 im geöffneten Zustand. Die obere Ausführung zeigt zwei transparente Elemente 12 im abgelegten Zustand, wobei aufgrund der Bombierung, entsprechend einer Dachwölbung eines festen Daches eines Kraftfahrzeuges der Platzbedarf für das abgelegte Faltdach 2, 3 relativ groß ist.
In der erfindungsgemäßen unteren Ausführung von Fig. 4 wird ein System vorgeschlagen, wobei die kleineren transparenten Elemente 13 geteilt ausgeführt werden, und wobei zwischen den kleineren transparenten Elemente 13 ein Textilstreifen des Verdeckbezugs 4, 5, nicht dargestellt, vorgesehen ist, welcher sich, beim Ablegen des Faltdachs 2, 3, nicht dargestellt, in geöffnetem Zustand, in Querrichtung zur Fahrzeuglängsrichtung falten/ knicken kann, so dass sich die kleineren transparenten Elemente 13 flach unter den größeren transparenten Elementen 12 ablegen können und so einen wesentlich geringeren Platzbedarf, hinsichtlich der Ablagehöhe, benötigen.

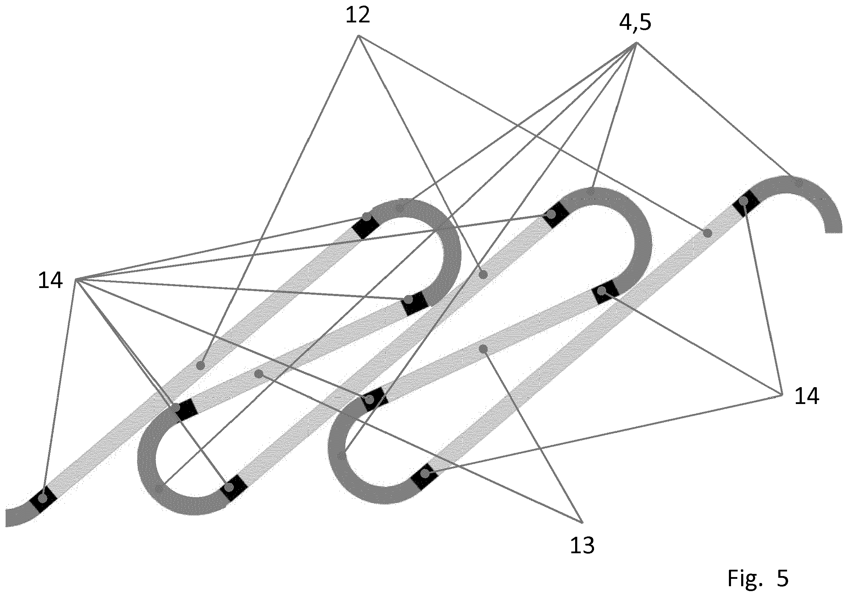

In Fig. 5 wird eine erfindungsgemäße Ablage der transparenten Elemente 12, 13 auf den Verdeckbezug 4,5 dargestellt. Die steifen transparenten Elemente 12,13 legen sich dabei auf den relativ weichen Verdeckbezug 4,5 ab.

### Bezugszeichenliste

- 1: Dachmechanismus
- 2: vorderes Faltdachsystem
- 3: hinteres Faltdachsystem
- 4: vorderer Verdeckbezug
- 5: hinterer Verdeckbezug
- 6: vorderer Bereich Dachöffnung
- 7: hinterer Bereich Dachöffnung
- 8: Führungsschiene
- 9: Führungsschiene
- 10: vorderer Dachrahmen
- 11: hinterer Dachrahmen
- 12: größere transparente Elemente
- 13: kleinere transparente Elemente
- 14: Befestigung für transparente Elemente in Führungsschienen

## Patentansprüche

1. Kraftfahrzeug mit einer Dachöffnung in einer festen Dachfläche des Kraftfahrzeugs und zumindest einem Dachmechanismus (1), zum wahlweisen Verschließen und zumindest teilweisen Öffnen der Dachöffnung, wobei der Dachmechanismus ein Faltdachsystem aufweist, wobei das Faltdachsystem zumindest einen Verdeckbezug (4,5) umfasst, **dadurch gekennzeichnet, dass** im Verdeckbezug zumindest ein größeres transparentes Element (12) angeordnet ist, und dass nach dem zumindest einem größeren transparenten Element (12), quer zur Fahrtrichtung mehrere kleinere transparente Elemente (13) angeordnet sind, wobei mindestens ein Element (12, 13) eine Bombierung quer zur Fahrtrichtung aufweist, welche im wesentlichen jener der Dachwölbung entspricht.

2. Kraftfahrzeug mit einer Dachöffnung nach Anspruch 1, **dadurch gekennzeichnet, dass** bei der Faltung des zumindest einen Verdeckbezugs (4,5) sich zumindest ein transparentes Element (12,13) auf den Textilstreifen des zumindest einen Verdeckbezugs (4,5) ablegt.

3. Kraftfahrzeug mit einer Dachöffnung nach Anspruch 1, **dadurch gekennzeichnet, dass** die transparenten Elemente (12, 13) durch Textilstreifen des Verdeckbezugs (4,5) voneinander getrennt sind.

4. Kraftfahrzeug mit einer Dachöffnung nach Anspruch 1, **dadurch gekennzeichnet, dass** die Wölbung quer zur Fahrtrichtung für die kleineren transparente Elemente (13) mit Hilfe der Textilstreifen des Verdeckbezugs (4,5) erreicht wird.

5. Kraftfahrzeug mit einer Dachöffnung nach Anspruch 1, **dadurch gekennzeichnet, dass** der Dachmechanismus (1) ein vorderes Faltdachsystem (2) und ein hinteres Faltdachsystem (3) aufweist.

6. Kraftfahrzeug mit einer Dachöffnung nach Anspruch 1, **dadurch gekennzeichnet, dass** die Anbringung des zumindest einen transparenten Elementes im Verdeckbezug (4, 5) mittels Einschäumen erfolgt.

7. Kraftfahrzeug mit einer Dachöffnung nach Anspruch 1, **dadurch gekennzeichnet, dass** die Anbringung des zumindest einen transparenten Elementes im Verdeckbezug (4, 5) mittels Klebung erfolgt.

8. Kraftfahrzeug mit einer Dachöffnung nach Anspruch 1, **dadurch gekennzeichnet, dass** die Anbringung des zumindest einen transparenten Elementes im Verdeckbezug (4, 5) mittels Verschweißung erfolgt.

9. Kraftfahrzeug mit einer Dachöffnung nach Anspruch 1, **dadurch gekennzeichnet, dass** der Verdeckbezug (4,5) eine Vielzahl an transparenten Elementen (12, 13) in Fahrzeuglängsrichtung aufweist.

10. Kraftfahrzeug mit einer Dachöffnung nach Anspruch 9, **dadurch gekennzeichnet, dass** die Vielzahl transparenter Elemente (12, 13) in Fahrzeuglängsrichtung als steife Elemente ausgeführt sind.

11. Kraftfahrzeug mit einer Dachöffnung nach Anspruch 5, **dadurch gekennzeichnet, dass** die Befestigung des vorderen Verdeckbezugs (4) und des hinteren Verdeckbezugs (5) mit der Fahrzeugkarosserie über das zumindest eine größere transparente Element (12) erfolgt.

12. Kraftfahrzeug mit einer Dachöffnung nach Anspruch 1, **dadurch gekennzeichnet, dass** die Faltung des zumindest einen Verdeckbezugs (4,5) über zusätzlich angeordnete Stützelemente erfolgt.

13. Kraftfahrzeug mit einer Dachöffnung nach Anspruch 1, **dadurch gekennzeichnet, dass** sich die kleineren transparenten Elemente (13) unter den größeren transparenten Elementen (12) ablegen.

14. Verfahren zum zumindest teilweisen Öffnen und Schließen eines Faltdaches in einem Kraftfahrzeug mit einer Dachöffnung nach Anspruch 1, wobei sich im Faltdach größere transparente Elemente (12) und kleinere transparente Elemente (13) in Fahrzeuglängsrichtung abwechseln, **dadurch gekennzeich-net**, dass ein Antrieb das Faltdach in Fahrzeuglängsrichtung zum Öffnen oder zum Schließen bewegt, so dass das Faltdach Falten ausbildet, wobei sich im gefalteten Zustand die größeren transparente Elemente (12) in der oberen, nach oben gewandten Seite einer Falte ablegen, und wobei sich die kleineren transparente Elemente (13) in der unteren, nach unten gewandten Seite einer Falte ablegen und von den größeren transparenten Elementen (12) verdeckt werden.

## Claims

1. Motor vehicle having a roof opening in a solid roof surface of the motor vehicle and having at least one roof mechanism (1) for the selective closure and at least partial opening of the roof opening, wherein the roof mechanism has a folding roof system wherein the folding roof system comprises at least one hood cover (4, 5), **characterized in that** at least one larger transparent element (12) is disposed in the hood cover, and **in that** after the at least one larger transparent element (12), transversely to the direction of travel, are disposed a plurality of smaller transparent elements (13), wherein at least one element (12, 13) has a camber transversely to the direction of travel, which camber substantially corresponds to that of the roof curvature.

2. Motor vehicle having a roof opening according to Claim 1, **characterized in that**, in the folding of the at least one hood cover (4, 5), at least one transparent element (12, 13) is deposited on the fabric strip of the at least one hood cover (4, 5).

3. Motor vehicle having a roof opening according to Claim 1, **characterized in that** the transparent elements (12, 13) are separated from one another by fabric strips of the hood cover (4, 5).

4. Motor vehicle having a roof opening according to Claim 1, **characterized in that** the curvature transversely to the direction of travel for the smaller transparent elements (13) is achieved with the aid of the fabric strips of the hood cover (4, 5).

5. Motor vehicle having a roof opening according to Claim 1, **characterized in that** the roof mechanism (1) has a front folding roof system (2) and a rear folding roof system (3).

6. Motor vehicle having a roof opening according to Claim 1, **characterized in that** the fitting of the at least one transparent element in the hood cover (4, 5) is realized by means of foaming.

7. Motor vehicle having a roof opening according to Claim 1, **characterized in that** the fitting of the at least one transparent element in the hood cover (4, 5) is realized by means of gluing.

8. Motor vehicle having a roof opening according to Claim 1, **characterized in that** the fitting of the at least one transparent element in the hood cover (4, 5) is realized by means of welding.

9. Motor vehicle having a roof opening according to Claim 1, **characterized in that** the hood cover (4, 5) has a multiplicity of transparent elements (12, 13) in the longitudinal direction of the vehicle.

10. Motor vehicle having a roof opening according to Claim 9, **characterized in that** the multiplicity of transparent elements (12, 13) in the longitudinal direction of the vehicle are constructed as stiff elements.

11. Motor vehicle having a roof opening according to Claim 5, **characterized in that** the fastening of the front hood cover (4) and of the rear hood cover (5) is realized via the at least one larger transparent element (12).

12. Motor vehicle having a roof opening according to Claim 1, **characterized in that** the folding of the at least one hood cover (4, 5) is realized via additionally arranged support elements.

13. Motor vehicle having a roof opening according to Claim 1, **characterized in that** the smaller transparent elements (13) are deposited beneath the larger transparent elements (12).

14. Method for at least partially opening and closing a folding roof in a motor vehicle having a roof opening according to Claim 1, wherein in the folding roof larger transparent elements (12) and smaller transparent elements (13) alternate in the longitudinal direction of the vehicle, **characterized in that** a drive moves the folding roof in the longitudinal direction of the vehicle for opening or for closure, so that the folding roof forms folds, wherein in the folded state the larger transparent elements (12) are deposited in the upper, upward-facing side of a fold, and wherein the smaller transparent elements (13) are deposited in the lower, downward-facing side of a fold and are concealed by the larger transparent elements (12).

## Revendications

1. Véhicule automobile comprenant une ouverture de toit dans une surface de toit fixe du véhicule automobile et au moins un mécanisme de toit (1), pour sélectivement fermer et au moins partiellement ouvrir l'ouverture de toit, le mécanisme de toit comprenant un système de toit pliant, le système de toit pliant comportant au moins un revêtement de capote (4, 5), **caractérisé en ce qu'**au moins un élément transparent (12) plus grand est disposé dans le revêtement de capote, et **en ce qu'**après ledit au moins un élément transparent (12) plus grand, plusieurs éléments transparents (13) plus petits sont disposés transversalement à la direction de conduite, au moins un élément (12, 13) présentant un bombement transversalement à la direction de conduite, lequel correspond sensiblement à celui de la courbure de toit.

2. Véhicule automobile comprenant une ouverture de toit selon la revendication 1,
**caractérisé en ce que**, lors du pliage dudit au moins un revêtement de capote (4, 5), au moins un élément transparent (12, 13) se dépose sur les bandes textiles dudit au moins un revêtement de capote (4, 5) .

3. Véhicule automobile comprenant une ouverture de toit selon la revendication 1,
**caractérisé en ce que** les éléments transparents (12, 13) sont séparés les uns des autres par des bandes textiles du revêtement de capote (4, 5).

4. Véhicule automobile comprenant une ouverture de toit selon la revendication 1,
**caractérisé en ce que** la courbure transversalement à la direction de conduite pour les éléments transparents (13) plus petits est obtenue à l'aide des bandes textiles du revêtement de capote (4, 5).

5. Véhicule automobile comprenant une ouverture de toit selon la revendication 1,
**caractérisé en ce que** le mécanisme de toit (1) comprend un système de toit pliant avant (2) et un système de toit pliant arrière (3).

6. Véhicule automobile comprenant une ouverture de toit selon la revendication 1,
**caractérisé en ce que** l'installation dudit au moins un élément transparent dans le revêtement de capote (4, 5) s'effectue par application de mousse.

7. Véhicule automobile comprenant une ouverture de toit selon la revendication 1,
**caractérisé en ce que** l'installation dudit au moins un élément transparent dans le revêtement de capote (4, 5) s'effectue par collage.

8. Véhicule automobile comprenant une ouverture de toit selon la revendication 1,
**caractérisé en ce que** l'installation dudit au moins un élément transparent dans le revêtement de capote (4, 5) s'effectue par soudage.

9. Véhicule automobile comprenant une ouverture de toit selon la revendication 1,
**caractérisé en ce que** le revêtement de capote (4, 5) comprend une pluralité d'éléments transparents (12, 13) dans la direction longitudinale du véhicule.

10. Véhicule automobile comprenant une ouverture de toit selon la revendication 9,
**caractérisé en ce que** la pluralité d'éléments transparents (12, 13) dans la direction longitudinale du véhicule sont réalisés sous forme d'éléments rigides.

11. Véhicule automobile comprenant une ouverture de toit selon la revendication 5,
**caractérisé en ce que** la fixation du revêtement de capote avant (4) et du revêtement de capote arrière (5) à la carrosserie de véhicule s'effectue par le biais dudit au moins un élément transparent (12) plus grand.

12. Véhicule automobile comprenant une ouverture de toit selon la revendication 1,
**caractérisé en ce que** le pliage dudit au moins un revêtement de capote (4, 5) s'effectue par le biais d'éléments de support disposés en plus.

13. Véhicule automobile comprenant une ouverture de toit selon la revendication 1,
**caractérisé en ce que** les éléments transparents (13) plus petits se déposent en dessous des éléments transparents (12) plus grands.

14. Procédé d'ouverture au moins partielle et de fermeture d'un toit pliant dans un véhicule automobile comprenant une ouverture de toit selon la revendication 1, des éléments transparents (12) plus grands et des éléments transparents (13) plus petits se succédant dans le toit pliant dans la direction longitudinale du véhicule, **caractérisé en ce qu'**un entraînement déplace le toit pliant dans la direction longitudinale du véhicule pour l'ouverture ou pour la fermeture, de telle sorte que le toit pliant forme des plis, les éléments transparents (12) plus grands se déposant, à l'état plié, dans le côté supérieur, tourné vers le haut, d'un pli, et les éléments transparents (13) plus petits se déposant dans le côté inférieur, tourné vers le bas, d'un pli et étant recouverts par les éléments transparents (12) plus grands.
